# EUROPEAN PATENT SPECIFICATION

(11) **EP 0 595 051 B1**
(45) Date of publication and mention of the grant of the patent: **14.08.1996**
(21) Application number: 93115772.1
(22) Date of filing: 30.09.1993
(51) Int. Cl.: B60P 3/08

(54) **A motor-vehicle transporter**
Kraftfahrzeugtransporter
Véhicule pour le transport de véhicules à moteur

(30) Priority: 29.10.1992 IT TO920879
(43) Date of publication of application: 04.05.1994
(73) Proprietor: ROLFO S.p.A., I-12042 Bra (Cuneo) (IT)
(72) Inventor: Rolfo, Giorgio, I-12042 Bra (Cuneo) (IT)
(74) Representative: Saconney, Piero

(56) References cited:
- EP-A- 0 418 178
- EP-A- 0 424 296
- FR-A- 2 455 527
- FR-A- 2 618 394
- US-A- 3 084 970
- PATENT ABSTRACTS OF JAPAN vol. 11, no. 263 (M-619)(2710) 26 May 1987 & JP-A-62 064 643 (HAMANA JIDOSHA) 23 March 1987

## Description

The present invention relates to a motor-vehicle transporter of the type comprising two load decks, one above the other, in which the upper load deck has at least one intermediate gap, in which the gap is occupied by a pivoting platform which is articulated about a transverse axis disposed at one of its ends so that it can pivot between a raised position in which it is coplanar with the rest of the upper deck and a lowered position in which it is inclined towards the lower platform, and in which means are provided for causing the pivoting platform to pivot.

Vehicles of this type are known from the documents IT-U-162 390 and EP-A-0 241 711.

In these known transporters, the pivoting platform has the advantage of increasing the load capacity of the upper deck, enabling one more car, or a large car or other vehicle, to be transported on this deck, which would not be possible with more conventional transporters.

In fact, in transporters according to the prior documents mentioned above, the pivoting platform only enabled one car to be disposed in an inclined attitude, with its front or rear wheels bearing on a fixed front portion of the upper deck and its rear or front wheels on the lowered pivoting platform.

The inclination of the car was such as to enable at least one further car to be loaded on the remaining portion of the upper deck, with one of its ends partially overlapping the end of the car which was transported in an inclined position.

The object of the present invention is to provide a motor-vehicle transporter of the type mentioned at the beginning, in which the load capacity of the upper deck is further increased and which also enables large cars or other vehicles to be transported, again on the upper deck, without the overall outline exceeding the height permitted by the regulations.

According to the present invention, this object is achieved by means of a motor-vehicle transporter of the type mentioned at the beginning, characterised in that the pivoting platform in turn has a gap which extends between its end adjacent its axis of articulation to the upper deck and an intermediate region of its length, in that the gap in the pivoting platform is occupied by a small platform which is adapted to bear a couple of rear or front wheels of a vehicle supported by the pivoting platform, which small platform is articulated to said pivoting platform about a transverse end axis disposed in the intermediate region so that the small platform can pivot between a raised position in which it is coplanar with the pivoting platform and a lowered position in which it has an opposite slope to that of the lowered pivoting platform, and in that means are provided for causing the small platform to pivot relative to the pivoting platform.

By virtue of this concept, the pivoting platform can accommodate a car or another vehicle in an attitude such that it is inclined either in the direction of travel or in the opposite direction, thus offering more possible combinations for the arrangement of the load according to the lengths and heights of the vehicles transported.

Document JP-A-62-64643 discloses a motor vehicle transporter in which an upper load deck has a pivoting platform of the aforesaid type. The pivoting platform has, at its rear end, a small platform which can pivot about a transverse end axis between a lowered position in which it is coplanar with the pivoting platform and a raised position with respect to the pivoting platform. The small platform of this prior art document is not adapted to bear a couple of wheels of a vehicle supported by the pivoting platform.

Further characteristics and advantages of the invention will become clear from a reading of the detailed description which follows with reference to the appended drawings which show a preferred embodiment thereof.

In the drawings:
Figures 1, 2 and 3 are side elevational views of a road vehicle in three typical conditions for the arrangement of the load of vehicles permitted by the invention,
Figure 4 is a perspective view of the region of the upper load deck of the vehicle of the preceding drawings which includes the pivoting platform, which in turn has a small pivoting platform, according to the invention,
Figure 5 is a side elevational view of the region shown in Figure 4 with the platform and its small platform raised and aligned, and
Figure 6 is a view similar to that of Figure 5 with the platform raised and its small platform lowered.

The drawings show a motor-vehicle transporter in the form of a truck which can tow a trailer used equally for transporting motor cars or other motor vehicles.

It should be understood, however, that the invention may be applied to any kind of vehicle, be it a road vehicle or a railway vehicle.

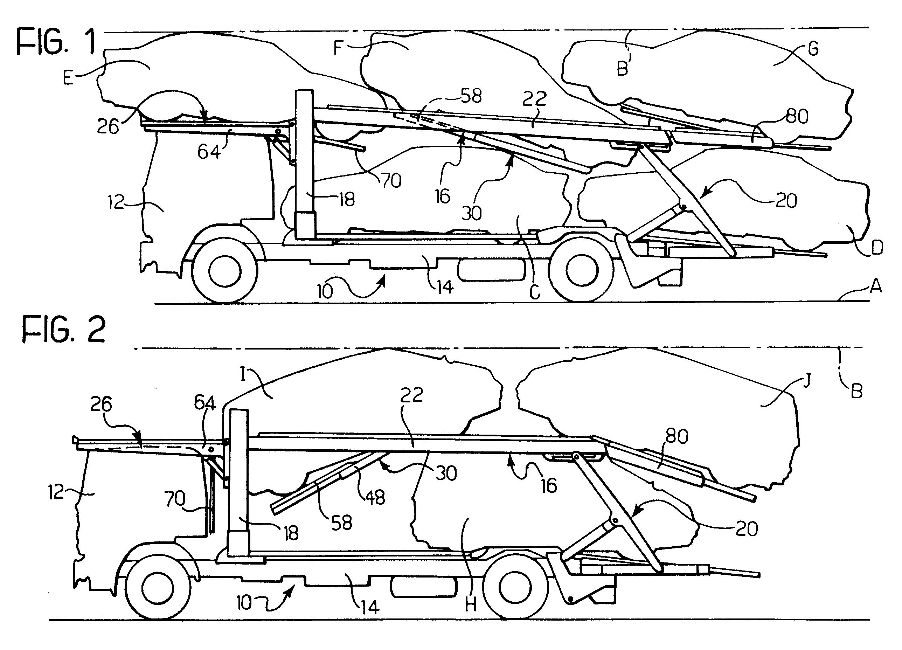

In Figures 1 to 3, the road surface is indicated A and the line of the maximum permissible height for the transportation of a load of vehicles by road is indicated B. The chassis of the truck is generally indicated 10 and its cab is indicated 12.

The chassis 10 has a load superstructure which, amongst other things, includes a lower load deck 14 and an upper load deck 16.

The upper deck 16 is supported on the chassis 10 by means of front vertical pillars 18 of known type and by a caliper-like rear support system, generally indicated 20, which could also be formed in a similar manner to the front pillars 18 or, alternatively, may to advantage be of the type described and illustrated in the document EP-A-0 024 265.

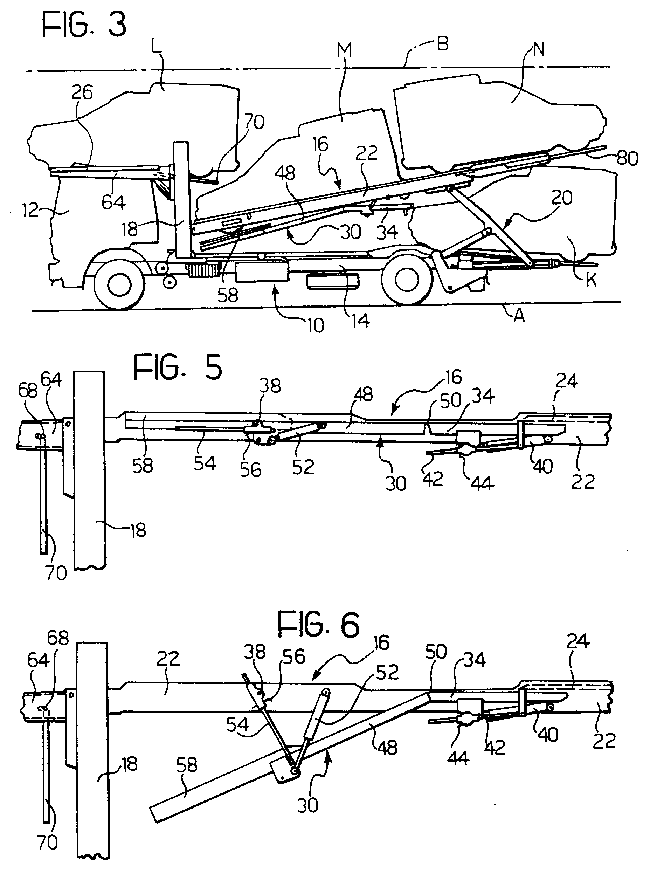

The pillars 18 and the support system 20 are such that the upper deck 16 can be supported, in known manner, in a raised, horizontal position, as shown in Figure 2, in a rearwardly-inclined position, as shown in Figure 1, or in a forwardly-inclined position, as shown in Figure 3.

The arrangement of the lower deck 14 is conventional and will not be considered further in the following description.

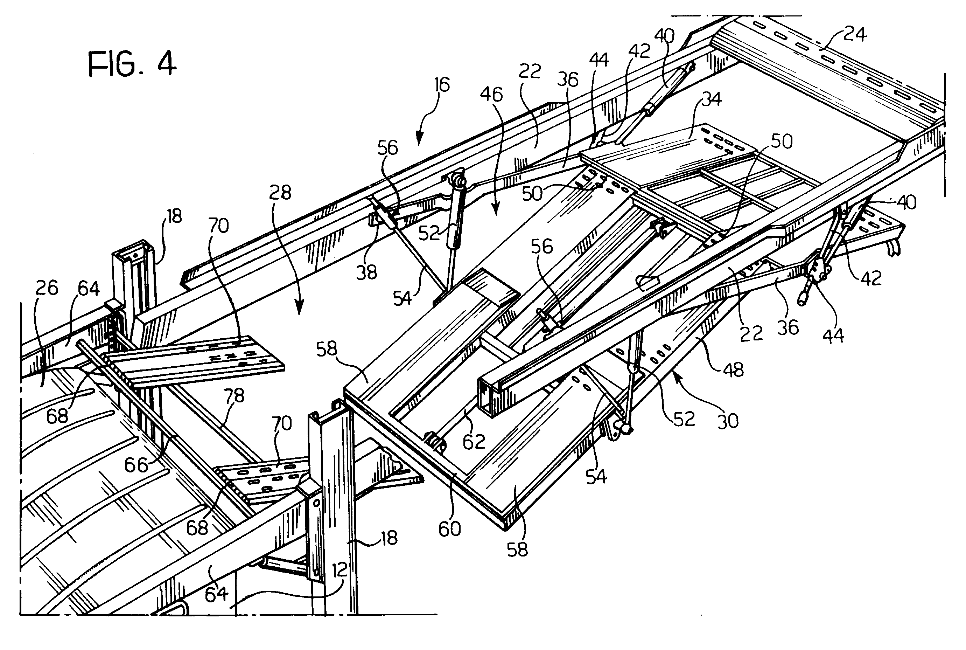

As far as the upper deck 16 is concerned, reference will now be made to Figure 4 and subsequently to Figures 5 and 6, returning then to Figures 1 to 3 with regard to the arrangement which, according to the invention, offers various possibilities for accommodating the load of vehicles.

With reference to Figures 4 to 6, the upper deck 16 comprises a pair of side members 22, between which a sliding portion 24 of the deck is supported.

A fixed portion of the load deck disposed over the cab 12 is indicated 26.

An intermediate gap 28 (Figure 4) between the two portions 24 and 26 of the upper deck is occupied by a pivoting platform, generally indicated 30.

The pivoting platform 30 comprises a platform proper 34 which is articulated by means of arms 36 about a transverse axis defined by pins 38.

The axis defined by the pins 38 is substantially at one end of the platform 30 which, in the embodiment shown by way of non-limiting example, is the front end. The platform 30 can thus pivot between a raised position, shown in Figure 5, amongst others, in which it is coplanar with the rest of the upper deck 16 and a lowered position, in which it is inclined towards the lower deck 14 (rearwardly, in Figures 1 and 4).

Operating means constituted by hydraulic or pneumatic jacks 40 are provided for pivoting the platform 30 between its raised and inclined positions.

Once the angular attitude of the platform 30 has been adjusted, it can be fixed permanently by means of telescopic rods 42 which can be stopped in various angular positions by means of pins 44, all in known manner.

The arms 36 articulated to the platform 30 define a gap 46 between them (Figure 4). This gap 46 is occupied by a small pivoting platform 48 which is articulated to the platform proper 34 by means of hinges 50. The hinges 50 define a transverse axis situated in the intermediate region of the platform 30 and enable the small platform 48 to pivot between a raised position, as in Figure 5, and a lowered position, as in Figures 2, 4 and 6.

In the embodiment shown, the small pivoting platform 48 is articulated at its rear end, with reference to the direction of travel of the transporter, so that it can be lowered forwardly.

Means are provided for pivoting the small platform 48 relative to the platform 30 and are preferably in the form of hydraulic or pneumatic jacks 52 of the same type as the jacks 40.

Telescopic rods 54 of the same type as the rods 42 are also preferably provided for stopping the small platform 48 in a suitable inclined attitude relative to the platform 48. As before, stop pins 56 are associated with the telescopic rods 54.

In the embodiment shown, the gap 28 in the upper load deck 16 advantageously extends beyond the end (the front end in the embodiment shown) of the small pivoting platform 48 remote from its articulation axis defined by the hinges 50.

The small pivoting platform 48 has a further platform which is constituted by tracks 58 interconnected by a cross member 60 and connected to the structure of the small pivoting platform 48 by means of a hydraulic or pneumatic jack 62.

The further platform 58 can be slid by means of the back 62 between a position in which it is retracted relative to the small pivoting platform 48 (Figures 4 and 6) and a position in which it projects from the end of the small platform 48 remote from its articulation axis defined by the hinges 50 (towards the front in the drawings).

The drawings, and Figure 4 in particular, show, by way of non-limiting example, a platform 30 disposed in a gap immediately behind the cab 12. This arrangement is advantageous for the loading of a vehicle on the platform 26 above the cab 12.

For this purpose, the pillars 18 support a pair of side members 64 interconnected by a cross member 66.

The cross member 66 is associated with a pivoting platform in the form of a pair of tracks 70.

The tracks 70 are articulated, by means of hinges 68, to the cross member 66 at the front end of the gap 28 remote from the articulation axis of the platform 30 defined by the pins 38.

The pillars 18 support a cross member 78 which is movable along the pillars (by means not shown) in order to support the tracks 70 of the pivoting platform selectively in a raised position, as in Figures 1, 3 and 4, or in an inactive, lowered position, as in Figures 5 and 6.

In its raised position, the platform constituted by the tracks 70 partially fills the gap 28 in the upper deck 16.

Figures 1 to 3 show three of the many different possibilities offered by the system according to the invention.

In Figure 1, two cars C and D are loaded on the lower deck 14 in conventional manner.

Three cars E, F and G of the same type are loaded on the upper deck 16 which is inclined rearwardly, in known manner, by means of the rear support system 20. The front wheels of the first car E bear on the pivoting platform 70 which is in the raised position.

The platform 30 is lowered, together with its small pivoting platform 48, which is coplanar with the platform 30 itself. The rear wheels of the car F bear on the small platform 48 and its front wheels bear on the rear end of the platform 30.

The tail of the car F is above the nose of the car E. The car G is supported by a conventional pivoting platform 80 with its front portion above the nose of the car F.

By virtue of this arrangement, none of the three cars E, F and G exceeds the maximum permissible height B.

In Figure 2, the upper deck 16 is raised so as to be substantially horizontal and the pivoting platform 34, which is not visible, is also raised to a position coplanar with the deck 16. The small pivoting platform 48, however, is lowered and its platform 58 is in the projecting position.

A minibus H is loaded on the lower deck 14. Two identical vehicles I and J are loaded on the upper deck 16. Of these, the vehicle I faces rearwardly with its front wheels on the platform 30 (not visible) which is raised so as to be horizontal, and with its rear wheels on the platform 58. The front wheels of the vehicle J in turn bear on the deck 16 and its rear wheels on the platform 80 which is inclined above the nose of the vehicle H.

In Figure 3, the truck is transporting four vans K, L, M and N. The van K is loaded onto the rear end portion of the lower deck 14.

The van L is loaded with its nose forwards on the platform 26 above the cab and on the pivoting platform 70 thereof, which is in the raised position.

The upper deck 16 is inclined downwardly and forwardly, in known manner. The platform proper 34 is inclined rearwardly and downwardly relative to the deck 16 and the small pivoting platform 48 is in turn inclined forwardly and downwardly, as in Figure 4.

The sliding platform 58 is projecting. The front portion of the van M is disposed under the rear portion of the van L and below the raised platform 70 and the rear portion of the van M bears on the platform 34.

The van N bears on the deck 16 and on its platform 80 which, in this case, is coplanar with the deck 16 and disposed above the van K.

By virtue of the inclined arrangement of the small pivoting platform 48 and its sliding platform 58, which is in the projecting position, the nose of the van M can be lowered to an extent such that the roof of the van L does not exceed the maximum permitted height B.

## Claims

1. A motor-vehicle transporter of the type comprising two load decks (14, 16), one above the other, in which the upper load deck (16) has at least one intermediate gap (28), in which the gap (28) is occupied by a pivoting platform (30) which is articulated about a transverse axis (56) disposed at one of its ends so that it can pivot between a raised position in which it is coplanar with the rest of the upper deck (16) and a lowered position in which it is inclined towards the lower platform (14), and in which means (40) are provided for causing the pivoting platform (30) to pivot, characterised in that the pivoting platform (30) in turn has a gap (46) which extends between its end adjacent its axis of articulation (38) to the upper deck (16) and an intermediate region of its length, in that the gap (46) in the pivoting platform (30) is occupied by a small platform (48) which is adapted to bear a couple of rear or front wheels of a vehicle supported by the pivoting platform (30), which small platform (48) is articulated to said pivoting platform (30) about a transverse end axis (50) disposed in the intermediate region so that the small platform (48) can pivot between a raised position in which it is coplanar with the pivoting platform (30) and a lowered position in which it has an opposite slope to that of the lowered pivoting platform (30), and in that means (52) are provided for causing the small platform (48) to pivot relative to the pivoting platform (30).

2. A vehicle according to Claim 1, characterised in that the small pivoting platform (48) has a sliding platform (58) which can slide between a position in which it is retracted relative to the small platform and a position in which it projects from the end of the small platform (48) remote from the articulation axis (50) thereof.

3. A vehicle according to Claim 2, characterised in that the gap (28) in the upper load deck (16) extends beyond the end of the small platform (48) remote from its articulation axis (50) and, when the sliding platform (58) is in its projecting position, it fills the space in the gap (28) between the end of the small platform (48) and the corresponding end of the gap (28) remote from the articulation axis (50).

4. A vehicle according to Claim 3, characterized in that a filling platform (70) associated with the gap (28) is articulated about a transverse axis (68) at the end of the gap (28) remote from the articulation axis (56) of the pivoting platform (30) and can be moved between a raised position in which it fills the space in the gap (28) in the upper deck (16) and a lowered, inactive position.

5. A vehicle according to any one of the preceding claims, characterised in that the pivoting platform (30) is articulated at its front end and the small platform (48) is articulated at its rear end, with reference to the direction of travel of the transporter.

## Patentansprüche

1. Kraftfahrzeugtransporter mit zwei Ladedecks (14, 16), die übereinander angeordnet sind, wobei das obere Ladedeck (16) zumindest einen Zwischenspalt (28) besitzt, wobei im Spalt (28) eine schwenkbare Plattform (30) liegt, die um eine Querachse (56) gelenkig gelagert ist, die an einem ihrer Enden so angeordnet ist, daß sich die Plattform (30) zwischen einer angehobenen Stellung, in der sie mit dem übrigen oberen Deck (16) in einer Ebene liegt, und einer abgesenkten Stellung verschwenken kann, in der sie zur unteren Plattform (14) geneigt ist, und wobei eine Einrichtung (40) vorgesehen ist, mit der die schwenkbare Plattform (30) verschwenkt werden kann, dadurch gekennzeichnet, daß die schwenkbare Plattform (30) ihrerseits einen Spalt (46) besitzt, der zwischen ihrem Ende neben ihrer Gelenksachse (38) zum oberen Deck (16) und einem Zwischenbereich ihrer Länge verläuft, wobei im Spalt (46) in der schwenkbaren Plattform (30) eine kleine Plattform (48) liegt, die so aufgebaut ist, um mehrere Hinter- oder Vorderräder eines Fahrzeugs aufzunehmen, das von der schwenkbaren Plattform (30) getragen wird, wobei die kleine Plattform (48) mit der schwenkbaren Plattform (30) um eine querliegende Endachse (50) gelenkig verbunden ist, die im Zwischenbereich so angeordnet ist, daß sich die kleine Plattform (48) zwischen einer angehobenen Stellung, in der sie mit der schwenkbaren Plattform (30) in einer Ebene liegt, und einer abgesenkten Stellung verschwenken kann, in der sie eine entgegengesetzte Neigung zur Neigung der abgesenkten schwenkbaren Plattform (30) besitzt, und daß eine Einrichtung (52) vorgesehen ist, um die kleine Plattform (48) relativ zur schwenkbaren Plattform (30) zu verschwenken.

2. Fahrzeug gemäß Anspruch 1, dadurch gekennzeichnet, daß die kleine schwenkbare Plattform (48) eine verschiebbare Plattform (58) besitzt, die zwischen einer Stellung, in der sie relativ zur kleinen Plattform zurückgezogen ist, und einer Stellung verschiebbar ist, in der sie von jenem Ende der kleinen Plattform (48) vorspringt, das von der Gelenksachse (50) entfernt liegt.

3. Fahrzeug gemäß Anspruch 2, dadurch gekennzeichnet, daß der Spalt (28) im oberen Ladedeck (16) über jenes Ende der kleinen Plattform (48) hinaus verläuft, das von ihrer Gelenksachse (50) entfernt liegt, wobei die verschiebbare Plattform (58) dann, wenn sie sich in ihrer vorspringenden Stellung befindet, den Zwischenraum im Spalt (28) zwischen dem Ende der kleinen Plattform (48) und jenem Ende des Spalts (28) ausfüllt, das von der Gelenksachse (50) entfernt liegt.

4. Fahrzeug gemäß Anspruch 3, dadurch gekennzeichnet, daß eine Zusatzplattform (70), die dem Spalt (28) zugeordnet ist, um eine Querachse (68) an jenem Ende des Spalts (28) verschwenkbar ist, das von der Gelenksachse (56) der schwenkbaren Plattform (30) entfernt liegt, wobei sie zwischen einer angehobenen Stellung, in der sie den Zwischenraum im Spalt (28) im oberen Deck (16) ausfüllt, und einer unteren, inaktiven Stellung bewegt werden kann.

5. Fahrzeug gemäß irgendeinem der bisherigen Ansprüche, dadurch gekennzeichnet, daß die schwenkbare Plattform (30) an ihrem Vorderende und die kleine Plattform (48) an ihrem Hinterende bezogen auf die Fahrtrichtung des Transporters gelenkig gelagert sind.

## Revendications

1. Véhicule pour le transport de véhicules automobiles du type comprenant deux étages de chargement (14, 16), l'un au-dessus de l'autre, dans lequel l'étage de chargement (16) supérieur présente au moins un vide intermédiaire (28), dans lequel le vide (28) est occupé par une plate-forme pivotante (30) articulée autour d'un axe transversal (56) disposé à l'une de ses extrémités, de manière à pouvoir pivoter entre une position levée, dans laquelle il est coplanaire avec le restant de l'étage supérieur (16), et une position abaissée, dans laquelle il est incliné vers la plate-forme inférieure (14), et dans lequel des moyens (40) sont prévus pour forcer la plate-forme pivotante (30) à pivoter, caractérisé en ce que la plate-forme pivotante (30) présente à son tour un vide (46) s'étendant entre son extrémité adjacente à son axe d'articulation (38), vers l'étage supérieur (16) et une zone intermédiaire de sa longueur, en ce que le vide (46) de la plate-forme pivotante (30) est occupé par une petite plate-forme (48) adaptée pour supporter un couple de roues arrière ou avant d'un véhicule supporté par la plate-forme pivotante (30), une petite plate-forme (48) étant articulée à ladite plate-forme pivotante (30), autour d'un axe d'extrémité transversal (50) disposé dans la zone intermédiaire, de manière que la petite plate-forme (48) puisse pivoter entre une position levée, dans laquelle elle est coplanaire avec la plate-forme pivotante (30) et une position abaissée, dans laquelle elle présente une pente opposée à celle de la plate-forme pivotante (30) abaissée, et en ce que des moyens (52) sont prévus pour forcer la petite plate-forme (48) à pivoter par rapport à la plate-forme pivotante (30).

2. Véhicule selon la revendication 1, caractérisé en ce que la petite plate-forme pivotante (48) présente une plate-forme coulissante (58) pouvant coulisser entre une position dans laquelle elle est rétractée par rapport à la petite plate-forme et une position dans laquelle elle fait saillie de l'extrémité de la petite plate-forme (48), à distance de son axe d'articulation (50).

3. Véhicule selon la revendication 2, caractérisé en ce que le vide (28) de l'étage de chargement (16) supérieur s'étend au-delà de l'extrémité de la petite plate-forme (48), à distance de son axe d'articulation (50) et, lorsque la plate-forme coulissante (58) se trouve dans sa position saillante, elle remplit l'espace du vide (28), entre l'extrémité de la petite plate-forme (48) et l'extrémité correspondante du vide (28), à distance de l'axe d'articulation (50).

4. Véhicule selon la revendication 3, caractérisé en ce qu'une plate-forme de remplissage (70) associée au vide (28) est articulée autour d'un axe transversal (68), à l'extrémité du vide (28) à distance de l'axe d'articulation (56) de la plate-forme pivotante (30) et peut être déplacée entre une position levée, dans laquelle elle remplit l'espace du vide (28) dans l'étage supérieur (16) et une position abaissée inactive.

5. Véhicule selon l'une quelconque des revendications précédentes, caractérisé en ce que la plate-forme pivotante (30) est articulée au niveau de son extrémité avant et la petite plate-forme (48) est articulée autour de son extrémité arrière, en se référant à la direction de déplacement du véhicule de transport.
